# EUROPÄISCHE PATENTSCHRIFT

(11) **EP 3 538 405 B1**
(45) Veröffentlichungstag und Bekanntmachung des Hinweises auf die Patenterteilung: **04.11.2020**
(21) Anmeldenummer: 17797850.9
(22) Anmeldetag: 09.11.2017
(51) Int. Cl.: B60S 3/00

(54) **HANDBLASGERÄT**
MANUAL VENTILATOR DEVICE
PORTABLE DISPOSITIF DE SOUFFLERIE

(30) Priorität: 09.11.2016 DE 102016121482; 11.04.2017 DE 102017107865; 13.07.2017 AT 16017 U; 18.08.2017 AT 17817 U
(43) Veröffentlichungstag der Anmeldung: 18.09.2019
(73) Patentinhaber: Airffect GmbH, 1010 Wien (AT)
(72) Erfinder: PASCHING, Andreas, 1140 Wien (AT)
(74) Vertreter: Keschmann, Marc
(86) Internationale Anmeldenummer: PCT/AT2017/000076
(87) Internationale Veröffentlichungsnummer: WO 2018/085868

(56) Entgegenhaltungen:
- DE-A1- 3 618 043
- GB-A- 2 416 673
- US-A- 6 021 584
- US-A1- 2002 129 515
- US-A1- 2004 143 990
- US-B1- 6 286 228

## Beschreibung

Die Erfindung betrifft ein Handblasgerät zum manuellen pneumatischen Trocknen von Oberflächen durch einen Benutzer des Handblasgeräts, mit einer Flachdüsenvorrichtung zum Ausstoßen von komprimierter Luft aus dem Handblasgerät, einem Griffbereich, insbesondere Griff zum manuellen Greifen und Führen der Flachdüsenvorrichtung über die zu trocknende Oberfläche, und einer Fördereinrichtung zum Fördern der komprimierten Luft zu der Flachdüsenvorrichtung. US 2002/129515 A1 offenbart eine Vorrichtung zum Trocknen von Fahrzeugen, umfassend ein Gebläse, einen Schlauch sowie ein tragbares Handblasgerät.

Handblasgeräte im Sinne dieser Erfindung sind Trocknungsgeräte zum Trocknen von nassen bzw. feuchten Oberflächen, die von einem Benutzer des Handblasgeräts von Hand bzw. manuell geführt werden. Als nasse bzw. feuchte Oberflächen können insbesondere nasse Fensterscheiben, nasse Fassaden oder gewaschene Fahrzeuge zu trocknen sein. Das Handblasgerät weist dazu einen Griffbereich auf, an dem es von seinem Benutzer mit der Hand gehalten werden kann. Der Benutzer greift dort das Handblasgerät und führt es manuell über die Oberfläche hinweg. Die Oberfläche wird dabei pneumatisch getrocknet, indem komprimierte bzw. unter Druck stehende Luft die an der Oberfläche vorhandene Nässe bzw. Feuchtigkeit von der Oberfläche wegbläst. Die Luft strömt dabei aus einer Flachdüsenvorrichtung des Handblasgeräts aus. Die Flachdüsenvorrichtung richtet die Luft, die von dem Handblasgerät ausgestoßen wird, gezielt auf die zu trocknende Oberfläche.

Der Erfindung liegt die Aufgabe zugrunde, ein Handblasgerät zu schaffen, mittels dem ein hervorragendes Trocknungsergebnis zu erzielen ist. Bei üblichen Handblasgeräten entsteht indessen oftmals nach dem Trocknen eine eher matte Oberfläche.

Diese Aufgabe ist erfindungsgemäß mit einem Handblasgerät zum manuellen, pneumatischen Trocknen von Oberflächen durch einen Benutzer gelöst, das mit einer Flachdüsenvorrichtung zum Ausstoßen von komprimierter Luft aus dem Handblasgerät auf die zu trocknende Oberfläche, einem Griffbereich, insbesondere Griff zum manuellen Greifen und manuellen Führen der Flachdüsenvorrichtung über die zu trocknende Oberfläche, und einer Fördereinrichtung zum Fördern der komprimierten Luft zu der Flachdüsenvorrichtung gestaltet ist. Dabei ist die Flachdüsenvorrichtung mit einer Flachdüse gestaltet und die Fördereinrichtung ist mit einem stationär angeordneten, insbesondere ortsfest angeordneten Hochdruckgebläse gestaltet.

Bei dem erfindungsgemäßen Handblasgerät ist die Fördereinrichtung zum Fördern von komprimierter Luft zu der beweglichen und manuell geführten Flachdüsenvorrichtung mittels eines Hochdruckgebläses gestaltet. Das Hochdruckgebläse komprimiert die Luft mit hohem Druck und fördert sie zu der Flachdüsenvorrichtung. Die Erfindung kombiniert damit eine manuell leicht zu bewegende und damit individuell ausrichtbare Flachdüse mit einem vergleichsweise schweren, eher klobigen Druckerzeuger. Die Ausbildung des Hochdruckgebläses als stationäre Einrichtung bedeutet, dass das Hochdruckgebläse insbesondere in einem von der Flachdüsenvorrichtung gesonderten Gehäuse untergebracht ist, von welchem die komprimierte Luft über eine flexible Verbindung zu der Flachdüsenvorrichtung geleitet werden kann. Gemäß einer bevorzugten Ausbildung ist hierbei vorgesehen, dass die Fördereinrichtung einen flexiblen Schlauch umfasst, der das Hochdruckgebläse mit der Flachdüsenvorrichtung verbindet. Das gesonderte Gehäuse kann stationär aufgestellt sein oder aber mit Rollen oder dgl. versehen sein, sodass es von einer stationären Position zu einer anderen stationären Position verfahren werden kann.

Mit einem erfindungsgemäßen Hochdruckgebläse kann, so hat die erfindungsgemäße Lösung gezeigt, auf wirtschaftliche Weise jene Luftmenge an der Flachdüsenvorrichtung bereitgestellt werden, die dort für die gewünschte Trocknungsfunktion erforderlich ist. Ferner kann die Flachdüsenvorrichtung selbst ausreichend klein und leicht gestaltet werden, damit diese von einem Benutzer des erfindungsgemäßen Handblasgeräts noch manuell bewegt werden kann. Die erfindungsgemäße Lösung steht im klaren Gegensatz zu herkömmlichen Trocknungsgeräten, wie etwa einem Haar-Fön, bei dem als Fördereinrichtung ein Niederdruckgebläse oder allenfalls ein Mitteldruckgebläse mit einer Pressung von unter 10 mbar verwendet werden.

Aber auch zu anderen herkömmlichen Trocknungsgeräten, wie etwa an Automobil-Waschanlagen, steht die erfindungsgemäße Lösung im Gegensatz, denn dort kann die Flachdüsenvorrichtung nicht manuell bewegt und individuell ausgerichtet werden.

Vorteilhaft weist das erfindungsgemäße Hochdruckgebläse eine maximale Pressung bzw. einen maximalen Gegendruck von größer 150 mbar, bevorzugt von zwischen 150 und 600 mbar, insbesondere zwischen 150 und 500 mbar, auf.

Besonders vorteilhaft weist das erfindungsgemäße Hochdruckgebläse einen maximalen Gegendruck von größer 250 mbar, bevorzugt von zwischen 250 und 450 mbar, insbesondere von zwischen 250 und 400 mbar, auf.

Die Stromaufnahme des erfindungsgemäßen Hochdruckgebläses erfolgt vorzugsweise bei ca. 400 V und seine Leistungsaufnahme beträgt vorteilhaft zwischen 3 und 10 kW, vorzugsweise zwischen 5 und 10 kW. Besonders bevorzugt ist das erfindungsgemäße Hochdruckgebläse als ein Seitenkanalverdichter gestaltet. Ein Seitenkanalverdichter ist eigentlich im Saugbetrieb besonders von Vorteil, er wird erfindungsgemäß aber im Blasbetrieb eingesetzt. Der Seitenkanalverdichter bietet dabei für die Erfindung vorteilhaft eine höhere Kompression und Förderrate an als übliche Axial- oder Radial-Ventilatoren.

Ein Seitenkanalverdichter enthält ein schnell rotierendes Schaufelrad. Das Schaufelrad ist mit einem gewissen Abstand zu einem umschließenden Gehäuse angeordnet. Diesen Bereich nennt man den Seitenkanal. Die Wirkungsweise ist wie bei mehreren hintereinander geschalteten Radialventilatoren. Die geförderte Luft strömt seitlich zwischen Förderschaufeln des Schaufelrads und wird durch die schnelle Rotation (Zentrifugalkraft) gleichzeitig in Drehrichtung und nach außen in den Seitenkanal beschleunigt. Dabei wird die Luft komprimiert. Im Seitenkanal gelangt die komprimierte Luft seitlich wieder zwischen eine nächste Zelle von Förderschaufeln. Die Luft rotiert dabei zwischen dem Einlass und dem Auslass des Seitenkanalverdichters mehrmals zwischen Förderschaufel und Seitenkanal und wird in einem Umlauf des Schaufelrads mehrfach verdichtet. Der Druckanstieg ist über die Länge des Seitenkanals annähernd linear.

Ein Seitenkanalverdichter arbeitet verschleißfrei, da kein bewegliches Teil das Gehäuse berührt. Gegenüber Radialventilatoren sind die Anforderungen an die Ausformung des Austrittskanals minimal. Mit einem Seitenkanalverdichter kann also auch ein kleinerer Aufbau erreicht werden, was besonders bei der erfindungsgemäßen Lösung vorteilhaft ist. Vorteilhaft ist die erfindungsgemäße Lösung daher auch mit einem Seitenkanalverdichter als Hochdruckgebläse gestaltet, der zusammen mit der Flachdüsenvorrichtung des Handblasgeräts manuell beweglich angeordnet ist.

Erfindungsgemäß ist das Hochdruckgebläse vorzugsweise stationär angeordnet.

Unter "stationär" wird dabei eine Anordnung verstanden, bei der das Hochdruckgebläse zumindest auf einer Unterlage abgestellt und auf dieser allenfalls weitgehend horizontal beweglich ist. Eine solche Unterlage kann insbesondere ein Wagen sein, der zusammen mit dem Hochdruckgebläse verfahren werden kann.

Ansonsten ist das erfindungsgemäße Hochdruckgebläse vorzugsweise vollkommen ortsfest und damit unbeweglich angeordnet. Als solches kann das Hochdruckgebläse eine große Förderleistung und einen hohen Förderdruck aufweisen.

Ferner ist bei dem erfindungsgemäßen Handblasgerät mit dem Hochdruckgebläse durch die Flachdüsenvorrichtung ein Volumenstrom von 200 bis 1000 m3/h, vorzugsweise von 300 bis 850 m3/h, vorzugsweise von 350 bis 500 m3/h, vorzugsweise 350 bis 450 m3/h, insbesondere 400 bis 420 m3/h, geschaffen. Alternativ ist mit dem Hochdruckgebläse durch die Flachdüsenvorrichtung ein Volumenstrom von 50 bis 500 m3/h geschaffen. Der Antriebsmotor des Hochdruckgebläses ist zu diesem Zweck mit einer Steuervorrichtung verbunden, die eingestellt ist, um das Hochdruckgebläse zur Erbringung eines entsprechenden Volumenstroms anzutreiben.

Beim pneumatischen Trocknen von Oberflächen mit Hilfe von Druckluft besteht die Schwierigkeit darin, die Parameter der Luftaufbringung auf die Oberfläche derart zu gestalten, dass die je Zeiteinheit ausgebrachte Luftmenge ein schnelles Trocknungsergebnis sicherstellt, der durch den Luftstrom auf die Wassertropfen aufgebrachte Impuls jedoch nicht so stark ist, dass die Wassertropfen dadurch zerstäubt werden. Ein Zerstäuben bzw. Zerteilen der an der Oberfläche anhaftenden Wassertropfen führt nämlich dazu, dass der dadurch entstandene Wassernebel nicht mehr vollständig und schnell von der Oberfläche weggebracht werden kann. Dies führt zu einem unvollständigen Trocknungsergebnis und zu einer trüben Oberfläche. Auf Grund von Versuchen hat sich herausgestellt, dass die Wahl einer geeigneten Strömungsgeschwindigkeit ein bedeutender Parameter ist, um die Luftaufbringung auf die Oberfläche zu optimieren. Erfindungsgemäß ist in diesem Zusammenhang vorgesehen, dass mit dem Hochdruckgebläse durch die Flachdüsenvorrichtung eine Strömungsgeschwindigkeit von 50 bis 300 m/s, vorzugsweise von 100 bis 200 m/s, vorzugsweise von 100 bis 150 m/s, insbesondere 120 bis 130 *m*/*s,* geschaffen ist. Bevorzugt handelt es sich dabei um die unmittelbar am Düsenausgang gemessene Geschwindigkeit. Die derartige Luftströmung führt zu optimalen Trocknungsergebnissen. Die gewünschte Strömungsgeschwindigkeit wird hierbei bei vorgegebenem Volumenstrom durch Wahl einer Düse mit geeigneter Austrittsfläche eingestellt.

Eine besonders bevorzugte Ausführungsform sieht hierbei vor, dass mit dem Hochdruckgebläse durch die Flachdüsenvorrichtung ein Volumenstrom von 300 bis 650 m3/h geschaffen ist und die Austrittsfläche der Flachdüse zur Erreichung einer unmittelbar am Düsenausgang gemessenen Strömungsgeschwindigkeit von 100 bis 200 m/s gewählt ist.

Bevorzugt ist vorgesehen, dass mit dem Hochdruckgebläse durch die Flachdüsenvorrichtung ein Volumenstrom von 350 bis 450 m3/h geschaffen ist und die Austrittsfläche der Flachdüse zur Erreichung einer unmittelbar am Düsenausgang gemessenen Strömungsgeschwindigkeit von 100 bis 150 m/s gewählt ist.

Bevorzugt ist vorgesehen, dass mit dem Hochdruckgebläse durch die Flachdüsenvorrichtung ein Volumenstrom von 400 bis 420 m3/h geschaffen ist und die Austrittsfläche der Flachdüse zur Erreichung einer unmittelbar am Düsenausgang gemessenen Strömungsgeschwindigkeit von 120 bis 130 m/s gewählt ist.

Da die Flachdüsenvorrichtung in der Regel nicht unmittelbar an die zu trocknende Oberfläche angehalten wird, sondern in einem (wenngleich möglichst geringen) Abstand, sieht eine bevorzugte Ausbildung vor, dass mit dem Hochdruckgebläse durch die Flachdüsenvorrichtung eine in einem Abstand von 7 cm in Strömungsrichtung vom Düsenaustritt gemessene Strömungsgeschwindigkeit von 40 bis 100 m/s, vorzugsweise von 50 bis 90 m/s, vorzugsweise von 60 bis 80 m/s, insbesondere 70 bis 80 m/s, geschaffen ist.

Die Fördereinrichtung ist vorzugsweise ferner mit einem flexiblen Schlauch gestaltet. Der Schlauchdurchmesser des flexiblen Schlauches beträgt bevorzugt zwischen 30 und 100 mm, vorzugsweise zwischen 40 und 100 mm, vorzugsweise zwischen 50 und 90, insbesondere zwischen 50 bis 70 mm. Die Schlauchlänge ist vorzugsweise zwischen 5 und 10 m, insbesondere zwischen 7 und 9 m gewählt. Mit dem erfindungsgemäßen Hochdruckgebläse ist in dem Schlauch bevorzugt eine Strömungsgeschwindigkeit von 20 bis 100 m/s, vorzugsweise von 30 bis 90 m/s, insbesondere von 60 bis 80 m/s, geschaffen. Der derartige Schlauch zwischen der Fördereinrichtung und der Flachdüsenvorrichtung ist vergleichsweise leicht zu handhaben und schafft zugleich zusammen mit der Flachdüsenvorrichtung den passenden Gegendruck für die erfindungsgemäße Fördereinrichtung.

Die Strömungsgeschwindigkeit der Luft am Düsenaustritt wird durch den Volumenstrom und die Austrittsfläche der Flachdüse bestimmt. Eine Vergrößerung der Austrittsfläche führt zu einem Anstieg des Volumenstroms. Eine Vergrößerung der Austrittsfläche führt zu einem Abfall der Strömungsgeschwindigkeit. Eine bevorzugte Ausbildung sieht in diesem Zusammenhang vor, dass die Flachdüse mit einem Flachdüsenschlitz gestaltet ist, der eine Austrittsfläche von 500 bis 1500 mm², vorzugsweise von 700 bis 1.200 mm², insbesondere von 850 bis 950 mm² aufweist.

Die Flachdüsenvorrichtung des erfindungsgemäßen Handblasgeräts ist mit einer Flachdüse geschaffen, die vorzugsweise mit einer Austrittsbreite von 100 bis 300 mm vorzugsweise von 150 bis 250 mm, vorzugsweise von 150 bis 200 mm, insbesondere von 175 bis 185 mm, gestaltet ist.

Besonders bevorzugt ist die Flachdüse mit einer Austrittshöhe von 0,5 bis 20 mm, vorzugsweise von 2 bis 8 mm, insbesondere von 4 bis 6 mm, insbesondere ca. 5 mm, gestaltet. Eine solche Flachdüsenvorrichtung ist kostengünstig herstellbar, gut zu handhaben und führt zugleich zu hervorragenden Trocknungsergebnissen.

Bevorzugt sind die Austrittshöhe und die Austrittsbreite innerhalb der oben genannten Bereiche so gewählt, dass sich die oben genannten bevorzugten Werte der Austrittsfläche ergeben.

Um die Aufbringung eines möglichst flachen und breiten Luftstrahles auf die zu trocknende Oberfläche zu gewährleisten, ist bevorzugt vorgesehen, dass die Flachdüse mit einem im Wesentlichen rechteckigen Flachdüsenschlitz gestaltet ist, dessen Verhältnis von Austrittsbreite zu Austrittshöhe von 25 bis 60, vorzugsweise von 30 bis 40, insbesondere von 33 bis 38, gestaltet ist. Dadurch kann die Luft in optimaler Weise einen nicht nur punktuellen Trocknungseffekt bereitstellen. Außerdem lassen sich dadurch kontrollierte und einheitliche Eigenschaften der Luftaufbringung über den gesamten Bereich, auf dem die Luft auf die Oberfläche auftrifft, sicherstellen. Dies insbesondere, wenn die Flachdüse so gehalten wird, dass die Austrittsbreite parallel zu der zu trocknenden Oberfläche verläuft.

Bevorzugt kann an der Flachdüse eine Griffschale zum Halten der *Flachdüsenvorrichtung* durch den Benutzer ausgebildet sein. Die Griffschale kann sich an der Flachdüsevorrichtung in unmittelbarer Nähe von deren Flachdüse befindet und ermöglicht es so dem Benutzer der Flachdüsenvorrichtung die Flachdüse präzise zu führen und auszurichten. Dies ist insbesondere wichtig, weil, das haben erfindungsgemäße Versuche gezeigt, der Benutzer die Flachdüse sehr gezielt über die zu trocknende Oberfläche führen muss, um ein hervorragendes Trocknungsergebnis zu erzielen. Mit der erfindungsgemäßen Lösung lassen sich neben Wassertropfen auch Wasser-Staub-Partikel sowie Staubpartikel allein von Oberflächen entfernen, sodass eine Trocknung und Säuberung der jeweiligen Oberfläche entsteht.

Die erfindungsgemäße *Flachdüsenvorrichtung* ist *vorzugsweise* mit einem Rohr zum Heranführen der komprimierten Luft zu der Flachdüse gestaltet und die Flachdüse ist ferner mit einem Flachdüsenschlitz gestaltet, der in Bezug auf die Längsachse des Rohres in einem Winkel kleiner 90° geneigt ausgerichtet ist. Der derart ausgerichtete Flachdüsenschlitz erstreckt sich bewusst nicht quer bzw. im rechten Winkel zur Längsachse des die komprimierte Luft heranführenden Rohres, sondern ist geneigt zu dieser Längsachse ausgerichtet. Damit ist an der Flachdüse die herangeführte Luft seitlich umgelenkt. Auf diese Weise ist es für einen Benutzer der Flachdüsenvorrichtung einfacher *sowohl eine Oberfläche* zu trocknen, die sich horizontal erstreckt als auch eine Oberfläche zu trocknen, die sich vertikal erstreckt. Bei beiden Oberflächen kann die erfindungsgemäß derart vorteilhaft ausgebildete Flachdüse in einfacher Weise so an die Oberfläche herangeführt werden, dass mit der dort ausgestoßenen Luft das sich auf der Oberfläche befindende Wasser sowohl in Bewegungsrichtung weggeblasen als auch quer zur Bewegungsrichtung zur Seite zu einer weiteren zu überfahrenden Reihe geschoben wird.

Der Flachdüsenschlitz ist insbesondere vorzugsweise in Bezug auf die Längsachse des Rohres in einem Winkel zwischen 45° und 75° geneigt ausgerichtet. Besonders bevorzugt ist der Flachdüsenschlitz in Bezug auf die Längsachse des Rohres in einem Winkel von 60° geneigt ausgerichtet. Mit der derartigen Ausrichtung ist zum einen die zu trocknende Oberfläche insbesondere dann vorteilhaft anzuströmen, wenn sie sich waagrecht oder senkrecht erstreckt und zum anderen ist eine derartige Flachdüsenvorrichtung besonders gut für den Benutzer zu handhaben. Darüber hinaus hat sich gezeigt, dass mit einer derartigen Ausrichtung des Flachdüsenschlitzes die dort ausströmende Luft in besonders vorteilhafter Weise ausgerichtet ist. Die ausströmende Luft wird dann innerhalb der Flachdüse derart umgelenkt, dass sie verstärkt an einer Seite des Flachdüsenschlitzes austritt. An dieser Seite des Flachdüsenschlitzes tritt eine besonders starke Trocknungswirkung auf. An der anderen Seite des Flachdüsenschlitzes strömt hingegen weniger Luft aus, diese dafür aber verstärkt quer zur Längsachse des Rohres. Mit dieser Luft wird eine seitliche Strömung erzeugt, mittels der die Flüssigkeit auf der zu trocknenden Fläche verstärkt zur Seite gedrängt wird.

Der Flachdüsenschlitz endet dabei besonders vorteilhaft mit einem seiner beiden Enden innerhalb der Projektionsfläche des Rohres. Wenn man in Richtung der Längsachse des Rohres auf dieses schaut, endet der Flachdüsenschlitz also an einem ersten Ende innerhalb der Projektionsfläche, während er mit seinem anderen, zweiten Ende über die Projektionsfläche hinausragt. Das erste Ende bildet jene Seite, an der die Luft stark und gerade ausgerichtet austritt und entsprechend stark trocknet. Das zweite Ende bildet hingegen jene Seite, an der die Luft stark umgelenkt wird, zur Seite gerichtet austritt und damit die Flüssigkeit auf der Oberfläche zur Seite drängt.

Der Flachdüsenschlitz ist ferner vorteilhaft an einem Flachdüsenfächer ausgebildet, der in der Form eines gleichseitigen Dreiecks gestaltet ist. Diese gleichseitige Form ergibt sich dabei, wenn man von der Seite auf die Flachdüsenvorrichtung und das zugehörige Rohr mit der daran angeordneten Flachdüse sieht. Mit der derartigen gleichseitigen Dreiecksform wird erreicht, dass in einem Bereich der Flachdüse, nämlich im Sockel der Dreiecksform die komprimierte Luft aus dem Rohr kommend gerade weitergeleitet wird, wohingegen sie in der Spitze der Dreiecksform vergleichsweise stark umgelenkt wird.

Die Flachdüsenvorrichtung ist ferner vorzugsweise wiederum mit einem Rohr zum Heranführen der komprimierten Luft zu der Flachdüse gestaltet ist und der Griff ist in Bezug auf die Längsachse dieses Rohres in einem Winkel kleiner 90°, bevorzugt in einem Winkel zwischen 45° und 75°, besonders bevorzugt in einem Winkel von 60° geneigt ausgerichtet. Der derart ausgerichtete Griff ist für den Benutzer der erfindungsgemäßen Flachdüsenvorrichtung sehr angenehm zu greifen und vermittelt ihm zugleich eine klare und präzise Rückmeldung, wie an der zugehörigen Flachdüse die Luft ausströmt und welche Abstände dort zu der zu trocknenden Oberfläche einzuhalten sind.

Eine bevorzugte Ausbildung sieht vor, dass die Flachdüse wenigstens einen Steg aufweist, welcher den Flachdüsenschlitz in Längsrichtung in wenigstens zwei Schlitzabschnitte teilt. Der wenigstens eine Steg verbindet hierbei die beiden parallelen Begrenzungswände des Flachdüsenschlitzes und hält diese in dem konstruktiv vorgegebenen Abstand zueinander. Der wenigstens eine Steg verhindert dabei eine Aufweitung des Flachdüsenschlitzes im Sinne einer Vergrößerung der Austrittshöhe des Schlitzes auf Grund des Drucks der ausströmenden Druckluft.

Die Anzahl der Stege ist grundsätzlich frei wählbar, wobei die Stege bevorzugt gleichmäßig über die Länge der Flachdüse verteilt angeordnet sind. Bevorzugt ist eine Ausbildung mit einem einzigen Steg, der als Mittelsteg den Flachdüsenabschnitt in zwei gleich lange Längsabschnitte teilt.

Der wenigstens eine Steg ist bevorzugt unmittelbar am Düsenaustritt angeordnet und kann dabei eine geringe Erstreckung in Richtung der Luftströmung aufweisen.

Bevorzugt weist der wenigstens eine Steg hierbei an seinem dem Düsenschlitz abgewandten Ende eine Anströmkante oder -fläche auf, die gekrümmt, insbesondere konkav gekrümmt, ausgebildet ist. Dies führt nur zu einer Verminderung der Geräuschentwicklung, sondern auch dazu, dass der aus den Längsabschnitten des Düsenschlitzes gesondert austretende Luftstrom gleichsam zu einem homogenen durchgehenden Luftstrom vereinigt wird anstatt als gesonderte Luftströme zu wirken. Dadurch wird eine wirksame Trocknung der zu trocknenden Oberfläche auch in dem schmalen Bereich des Steges gewährleistet.

Eine weitere bevorzugte Weiterbildung der Flachdüse sieht vor, dass diese an ihrem austrittsseitigen Rand ein flexibles Element, insbesondere eine flexible Lippe aufweist, welche dazu dient, die zu trocknende Oberfläche im Falle einer Berührung oder einer Kollision der Flachdüse mit der Oberfläche diese vor Beschädigungen zu schützen. Bevorzugt ist jeweils eine flexible Lippe an den beiden parallelen Längsrändern der Flachdüse am Düsenaustritt angeordnet und erstreckt sich bevorzugt im Wesentlichen über die gesamte Länge der Längsränder. Insbesondere erstreckt sich die flexible Lippe über den gesamten Umfang des Flachdüsenschlitzes.

Das flexible Element kann hierbei aus einem flexiblen Kunststoffmaterial, wie z.B. aus Silikon oder dgl. bestehen.

Nachfolgend wird ein Ausführungsbeispiel einer erfindungsgemäßen Lösung anhand der beigefügten schematischen Zeichnungen näher erläutert. Es zeigen:
- Fig. 1: eine Seitenansicht eines Ausführungsbeispiels eines erfindungsgemäßen Handblasgeräts,
- Fig. 2: eine Vorderansicht des Handblasgeräts gemäß Fig. 1 mit dessen Gehäuse,
- Fig. 3: die Vorderansicht gemäß Fig. 2 in vergrößerter Darstellung bei geöffnetem Gehäuse,
- Fig. 4: eine Seitenansicht eines Ausführungsbeispiels einer Flachdüsenvorrichtung für das Handblasgerät gemäß Fig. 1 bis 3,
- Fig. 5: eine Frontalansicht auf den Flachdüsenschlitz,
- Fig. 6: eine Schnittansicht entlang der Linie VI-VI der Fig. 5,
- Fig. 7: eine abgewandelte Ausbildung eines Handblasgeräts und
- Fig. 8: eine Explosionszeichnung des Handblasgeräts gemäß Fig. 7.

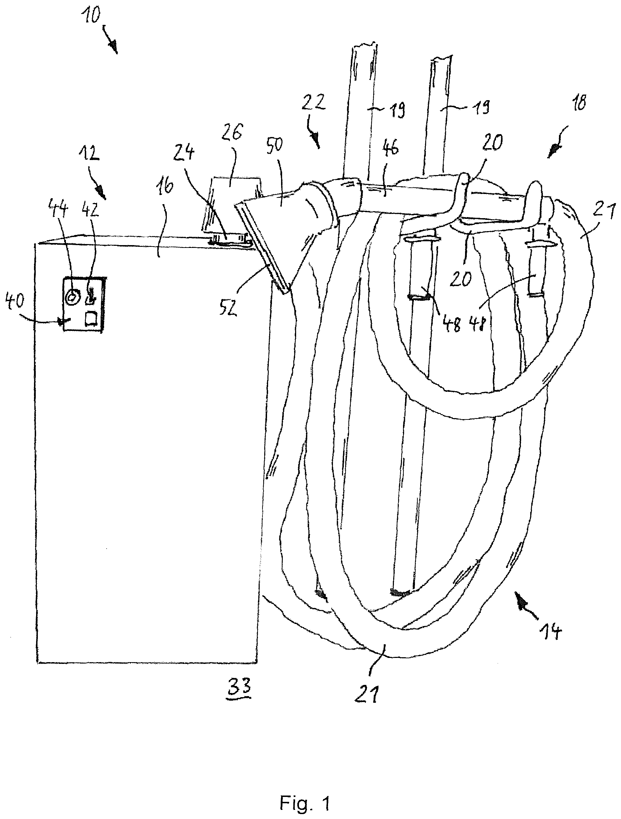

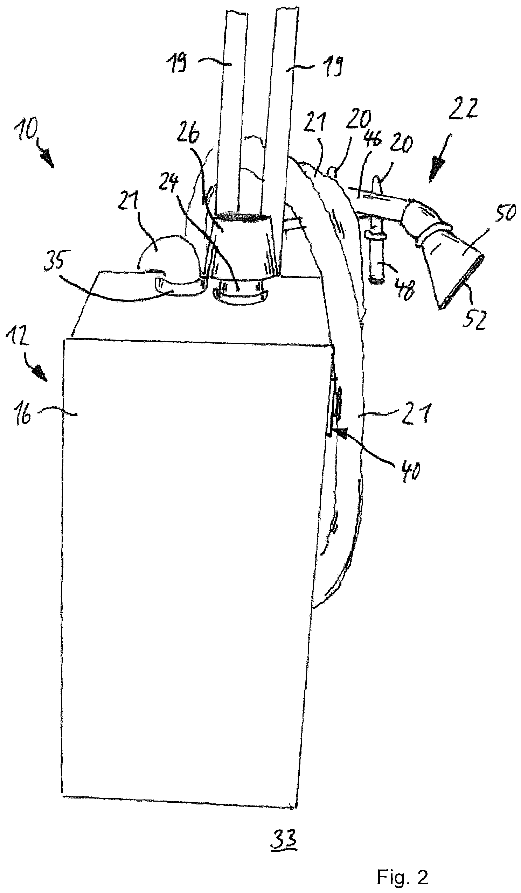

In den Fig. 1 bis 3 ist ein Handblasgerät 10 zum pneumatischen Trocknen von Oberflächen, wie etwa Kraftfahrzeugen oder Gebäudeverglasungen dargestellt. Das Handblasgerät 10 weist einen in Fig. 1 links dargestellten, stationären Teil 12 und einen in Fig. 1 rechts dargestellten, beweglichen Teil 14 auf.

Der stationäre Teil 12 umfasst ein ortsfestes, kubisches Gehäuse 16 und eine daneben angeordnete, ortsfeste Haltevorrichtung 18. Diese ist mit zwei senkrechten Stützpfosten 19 sowie davon horizontal abstehenden Armträgern 20 gebildet.

Der bewegliche Teil 14 umfasst einen flexiblen Schlauch 21, der mit einem seiner beiden Enden an dem Gehäuse 16 angeschlossen ist. An dem anderen Ende des Schlauchs 21 befindet sich eine dann manuell bewegliche Flachdüsenvorrichtung 22.

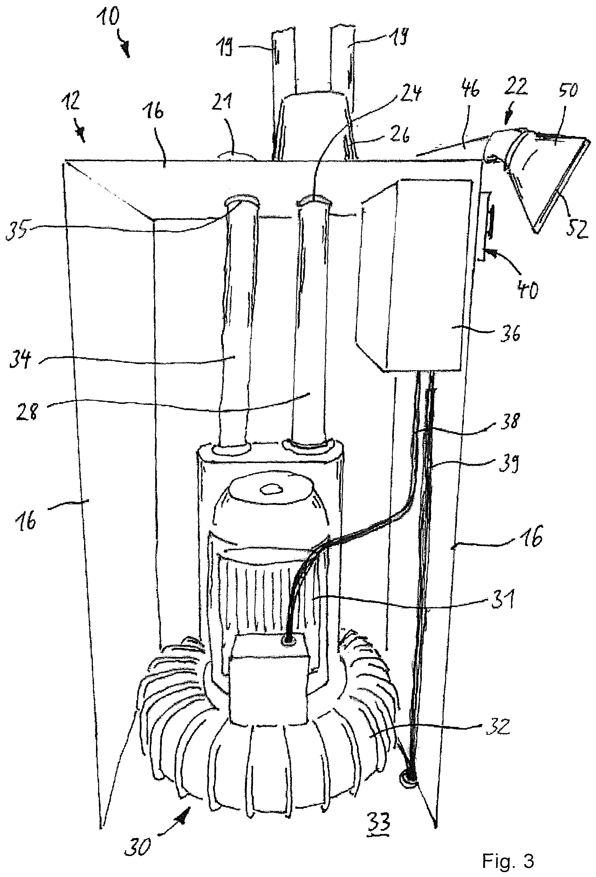

Das Gehäuse 16 und dessen Inhalt sind in Fig. 3 näher dargestellt. An der Oberseite des Gehäuses 16 befindet sich ein Lufteinlass 24, der mit einem kegelstumpfförmigen Filter 26 versehen ist. Der Filter 26 ragt dabei nach oben hin von der Oberseite des Gehäuses 16 ab. Der Lufteinlass 24 führt durch das Gehäuse 16 hindurch in dessen Inneres. Dort befindet sich ein Einlassrohr 28 welches senkrecht nach unten zu einem Hochdruckgebläse 30 führt. Das Hochdruckgebläse 30 ist als ein Seitenkanalverdichter bzw. Seitenkanalgebläse gestaltet und erzeugt im Betrieb einen Förderdruck von größer 100, insbesondere größer 250 mbar. Es ist von einem elektrischen Motor 31 angetrieben, der eine Stromaufnahme von 400 V und eine Leistungsaufnahme zwischen 3 und 10 kW, insbesondere zwischen 5 und 10 kW, hat. Der Motor 31 ist dabei im Zentrum des Gehäuses 16 mit vertikal ausgerichteter Drehachse angeordnet. Dabei ist ein im Wesentlichen Torus-förmiger Förderkanal 32 des Hochdruckgebläses 30 mit dem darin enthalten (innenliegenden) Seitenkanal in horizontaler Ebene, also parallel zu einer Aufstellfläche 33 ausgerichtet. Das Hochdruckgebläse 30 ist unmittelbar an der Aufstellfläche 33 ortsfest angebracht bzw. befestigt und ringsherum weist das Gehäuse 16 keinen Gehäuseboden auf. Auf diese Weise ist die Anordnung statisch besonders stabil und akustisch besonders gedämpft gelagert. Ferner ist die Anordnung besonders vorteilhaft zu reinigen.

In Inneren des Gehäuses 16 ist ferner eine Steuerung 36 für den Motor 31 angeordnet, die mit diesem mittels einer elektrischen Leitung 38 an den Motor 31 betrieblich gekoppelt und die ferner mittels einer elektrischen Zuleitung 39 mit einer externen Stromquelle (nicht dargestellt) gekoppelt ist. Außenseitig befindet sich dort, wo innenseitig die Steuerung 36 angeordnet ist, an dem Gehäuse 16 ein Bedienfeld 40. An dem Bedienfeld 40 kann die Steuerung 36 von einem Benutzer des Handblasgeräts 10 mittels einer Münzzahleinrichtung 42 und einem Notaus-Schalter 44 bedient werden.

An dem Förderkanal 32 des Hochruckgebläses 30 ist ferner ein Auslassrohr 34 angeschlossen, das senkrecht nach oben zu einem Luftauslass 35 führt. Der Luftauslass 35 durchsetzt das Gehäuse 16 an dessen Oberseite. Außenseitig ist an dem Luftauslass 35 dann der flexible Schlauch 21 mit einem seiner beiden Enden angeschlossen. Der Schlauch 21 weist dabei einen Schlauchdurchmesser von zwischen 30 und 100 mm, insbesondere zwischen 50 und 100 mm, insbesondere zwischen 50 und 70 mm bzw. zischen 70 und 90 mm auf. Die Schlauchlänge beträgt zwischen 5 und 10 m, insbesondere zwischen 7 und 9 m. Mit dem Hochdruckgebläse 30 wird im Betrieb in dem Schlauch 21 eine Strömungsgeschwindigkeit an komprimierter Luft von 5 bis 100 m/s, insbesondere von 20 bis 100 m/s, insbesondere von 40 bis 80 m/s bzw. von 50 bis 90 m/s erzeugt.

Die sich an dem anderen Ende des Schlauches 21 befindende Flachdüsenvorrichtung 22 umfasst ein ca. 50 cm langes Rohr 46, dessen Durchmesser dem des Schlauches 21 entspricht. An dem Rohr 46 sind radial abstehend zwei Griffe 48 oder alternativ nur ein Griff angebracht. Mittels der Griffe 48 kann ein Bediener des Handblasgeräts 10 die Flachdüsenvorrichtung 22 greifen und manuell führen.

An dem vom Schlauch 21 abgewandten Ende des Rohrs 46 befindet sich eine Flachdüse 50, die als eine Flachdüse gestaltet ist. Die Flachdüse weist einen geraden Flachdüsenschlitz 52 mit einer Austrittsbreite von 100 bis 250 mm, vorliegend 180 mm, und einer Austrittshöhe von 0,5 bis 20 mm, insbesondere von 1 bis 10 mm, vorliegend 5 mm, auf.

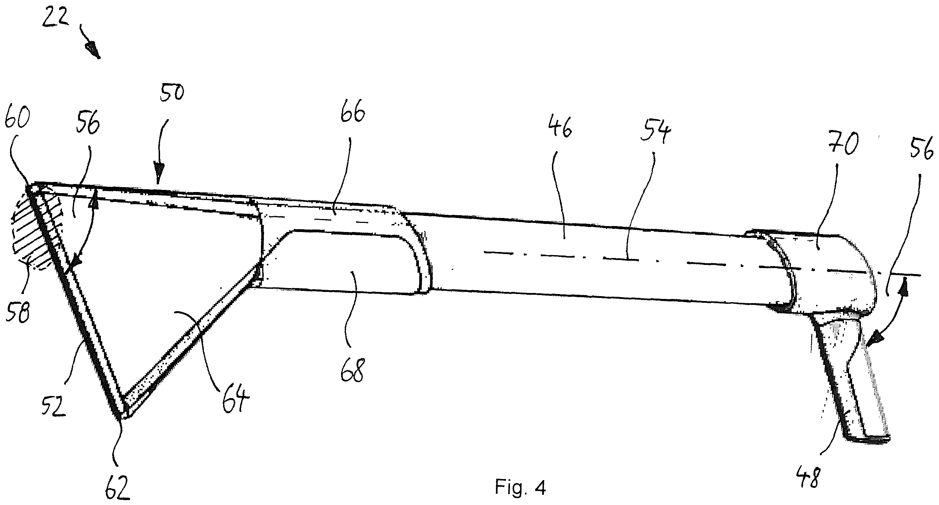

In Fig. 4 ist ein Ausführungsbeispiel der Flachdüsenvorrichtung 22 dargestellt, das ebenfalls mit einem Rohr 46 und einer an dessen Ende angebrachten Flachdüse 50 gestaltet ist. Die Flachdüse 50 weist einen Flachdüsenschlitz 52 auf, der in Bezug auf eine Längsachse 54 des Rohres 46 geneigt bzw. schräg ausgerichtet ist. Der Flachdüsenschlitz 52 nimmt dabei zu der Längsachse 54 einen Winkel 56 von 60° ein. Dabei befindet sich der Flachdüsenschlitz 52 nicht symmetrisch zum Rohr 46, sondern ist bezogen auf dessen Projektionsfläche 58 außermittig angeordnet. Ein erster Endbereich bzw. ein erstes Ende 60 des Flachdüsenschlitzes 52 erstreckt sich vollständig innerhalb der Projektionsfläche 58, während ein zweiter Endbereich bzw. ein zweites Ende 62 über die Projektionsfläche 58 hinausragt. Auf diese Weise ist insgesamt die Flachdüse 50 als ein Düsenfächer 64 gestaltet, der von der Seite betrachtet, so wie es in Fig. 4 dargestellt ist, im Wesentlichen die Form eines gleichseitigen Dreiecks aufweist.

Von diesem Düsenfächer 64 erstreckt sich zum Rohr 46 hin ein Flachdüsenrohr 66, dessen Durchmesser geringfügig größer ist, als der des Rohres 46 und das derart auf das Rohr 46 aufgesteckt ist. An diesem Flachdüsenrohr 66 befindet sich an der bezogen auf Fig. 4 nach unten gerichteten Seite, der sogenannten Unterseite der Flachdüsenvorrichtung 22 eine Griffschale 68. Die Griffschale 68 umgreift das luftführende Rohr 46 selbst und liegt an dessen Mantelfläche etwa über den halben Umfang hinweg flächig an. Zugleich befindet sich an dieser Unterseite der Flachdüsenvorrichtung 22 am anderen Ende des Rohres 46 ein Griffrohr 70, das ebenfalls auf das Rohr 46 aufgeschoben ist. An diesem Griffrohr 70 steht der Griff 48 nach unten hin ab, und zwar ebenfalls in einem Winkel 56 von 60° bezogen auf die Längsachse 54 des Rohres 46.

Mit dem Griff 48 und der Griffschale 68 ergeben sich für den Benutzer so zwei Handhabungsbereiche an der Flachdüsenvorrichtung 22, mittels denen die Flachdüsenvorrichtung 22 in besonders vorteilhafter und sicherer Weise über eine zu trocknende oder zu reinigende Oberfläche zu führen ist.

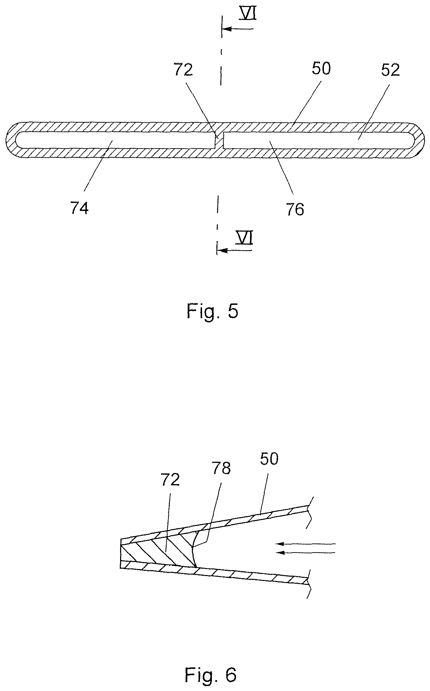

In der Frontalansicht auf die Austrittsöffnung der Flachdüse 50 gemäß Fig. 5 ist eine bevorzugte Ausbildung der Flachdüse 50 gezeigt, bei welcher ein Mittelsteg 72 die obere und die untere, den Flachdüsenschlitz 52 begrenzende Wand verbindet. Der Mittelsteg 72 teilt den Flachdüsenschlitz 52 in einen Schlitzabschnitt 74 und einen Schlitzabschnitt 76. Der Mittelsteg 72 hält die obere und die untere Wand in einem vorgegebenen Abstand zueinander.

Wie in der Schnittansicht gemäß Fig. 6 dargestellt, kann der Mittelsteg 72 eine konkav gekrümmte Anströmkante 78 aufweisen, um eine akustische Anregung zu vermeiden. Dadurch kann dem Entstehen von unangenehmen Pfeifgeräuschen entgegengewirkt werden.

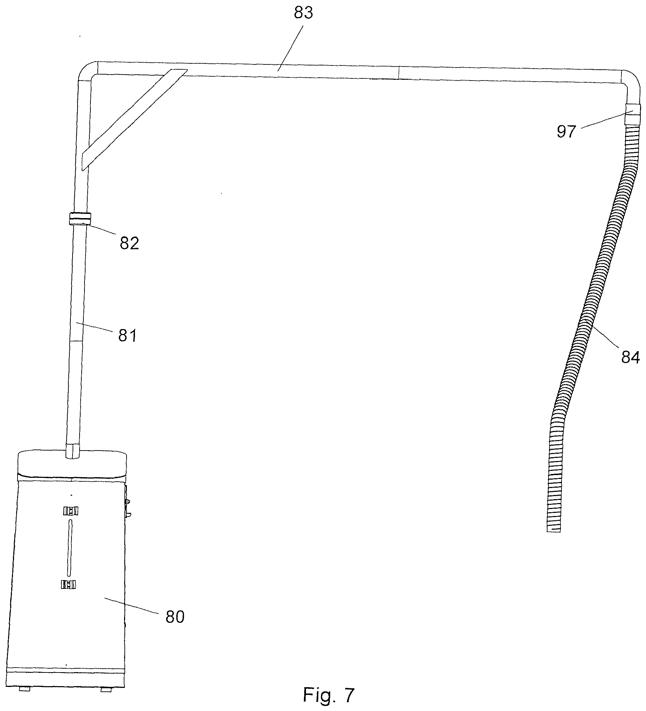

In Fig. 7 ist eine abgewandelte Ausbildung eines Handblasgeräts 80 dargestellt, welches für den Einsatz durch kommerzielle Anbieter angepasst ist. Das Handblasgerät 80 ist im Unterschied zu der Ausbildung gemäß den Fig. 1-3 nicht unmittelbar an einen flexiblen Schlauch, sondern an ein starres, in vertikaler Richtung verlaufendes Rohr 81 angeschlossen. An das starre Rohr 81 ist über einen Drehflansch 82 ein weiteres Rohr 83 angeschlossen, welches einen 90°-Winkel umfasst, sodass das Rohr 83 eine horizontale Auskragung zur Verfügung stellt. An dem dem Handblasgerät 80 abgewandten Ende des Rohres 83 weist dieses einen weiteren 90°-Winkel auf, an den ein flexibler Schlauch 84 angeschlossen ist, an dessen Ende eine nicht dargestellte Flachdüsenvorrichtung anschließbar ist. Der Drehflansch 82 ermöglicht eine Drehung des Rohres 83 relativ zum Rohr 81 um eine in Richtung der Rohrachse des Rohres 81 verlaufende vertikale Drehachse, sodass der flexible Schlauch 84 samt Flachdüsenvorrichtung großräumig verlagerbar ist und ein neben dem Handblasgerät 80 und unterhalb des horizontalen Rohrs 83 angeordnetes Fahrzeug ohne Mühe von allen Seiten getrocknet werden kann.

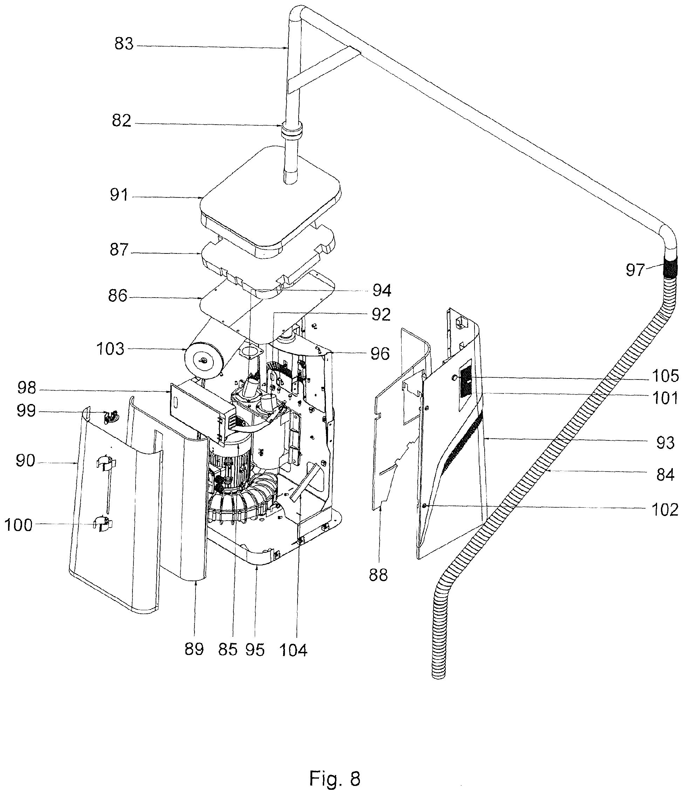

In der Explosionszeichnung gemäß Fig. 8 ist das Handblasgerät 80 in seine Einzelteile zerlegt gezeigt. Dabei sind die folgenden Bauteile ersichtlich:
- 80: Handblasgerät
- 81: Rohr
- 82: Drehflansch
- 83: Rohr
- 84: Schlauch
- 85: Hochdruckgebläse
- 86: Schallschutznetz
- 87: Glasswolle
- 88: seitliche Schalldämmung
- 89: vordere Schalldämmung
- 90: vorderer Gehäuseteil
- 91: oberer Gehäuseteil
- 92: Einlassrohr
- 93: unterer linker Gehäuseteil
- 94: Auslassrohr
- 95: Grundplatte
- 96: Anschlusshalterung
- 97: Drehflansch
- 98: Steuerbox
- 99: Scharnier
- 100: Rohrhalterung
- 101: Frontplatte
- 102: Verschlusselemente
- 103: Luftfilter
- 104: LED Paneel
- 105: Betätigung für Hintergrundbeleuchtung

Mittels des Hochdruckgebläses wird im Betrieb des Handblasgeräts durch die Flachdüsenvorrichtung ein Volumenstrom von 50 bis 500 m3/h bzw. von 200 bis 1000 m3/h, insbesondere von 350 bis 500 m3/h bzw. von 300 bis 850 m3/h, gefördert. Dabei wird mittels des Hochdruckgebläses durch die Flachdüsenvorrichtung eine Strömungsgeschwindigkeit von 50 bis 300 m/s, insbesondere von 100 bis 200 m/s erzeugt.

Das erfindungsgemäße Handblasgerät ist nicht nur zum Trocknen von Oberflächen, sondern auch zum Säubern bzw. Reinigen von Oberflächen mittels Abblasen geeignet. Insbesondere ist das Handblasgerät vorteilhaft dazu geeignet, Oberflächen von Staub- und Sandablagerungen zu befreien. Diese Funktion ist insbesondere in Ländern dieser Erde vorteilhaft, in denen Oberflächen aufgrund der umweltbedingten Einflüsse schnell einstauben, wie etwa Ländern der Wüsten- und Steppenzonen.

Darüber hinaus ist das erfindungsgemäße Handblasgerät vorteilhaft mit einer Heizung für die ausgestoßene, komprimierte Luft versehen. Diese Heizung erwärmt die auszustoßende Luft vorteilhaft in Strömungsrichtung hinter dem Hochdruckgebläse. Sie ist vorzugsweise im Bereich des Auslassrohrs angeordnet und als eine elektrische Heizung gestaltet. Vorteilhaft kann auch die Abwärme des Motors zum Aufwärmen von auszustoßender Luft genutzt werden. Mittels der Abwärme kann die ausgestoßene Luft auf eine Temperatur von zwischen 30 und 50 °C erwärmt werden.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste:

- 10: Handblasgerät
- 12: stationärer Teil
- 14: beweglicher Teil
- 16: Gehäuse
- 18: Haltevorrichtung
- 19: Stützpfosten
- 20: Armträger
- 21: Schlauch
- 22: Flachdüsenvorrichtung
- 24: Lufteinlass
- 26: Filter
- 28: Einlassrohr
- 30: Hochdruckgebläse
- 31: Motor
- 32: Förderkanal
- 33: Aufstellfläche
- 34: Auslassrohr
- 35: Luftauslass
- 36: Steuerung
- 38: Leitung
- 39: Zuleitung
- 40: Bedienfeld
- 42: Münzzahleinrichtung
- 44: Notaus-Schalter
- 46: Rohr
- 48: Griff
- 50: Flachdüse
- 52: Flachdüsenschlitz
- 54: Längsachse des Rohres
- 56: Winkel
- 58: Projektionsfläche
- 60: erstes Ende des Flachdüsenschlitzes
- 62: zweites Ende des Flachdüsenschlitzes
- 64: Düsenfächer
- 66: Flachdüsenrohr
- 68: Griffschale
- 70: Griffrohr
- 72: Mittelsteg
- 74: Flachdüsenabschnitt
- 76: Flachdüsenabschnitt
- 78: Anströmkante
- 80: Handblasgerät
- 81: Rohr
- 82: Drehflansch
- 83: Rohr
- 84: Schlauch
- 85: Hochdruckgebläse
- 86: Schallschutznetz
- 87: Glasswolle
- 88: seitliche Schalldämmung
- 89: vordere Schalldämmung
- 90: vorderer Gehäuseteil
- 91: oberer Gehäuseteil
- 92: Einlassrohr
- 93: unterer linker Gehäuseteil
- 94: Auslassrohr
- 95: Grundplatte
- 96: Anschlusshalterung
- 97: Drehflansch
- 98: Steuerbox
- 99: Scharnier
- 100: Rohrhalterung
- 101: Frontplatte
- 102: Verschlusselemente
- 103: Luftfilter
- 104: LED Paneel
- 105: Betätigung für Hintergrundbeleuchtung

## Patentansprüche

1. Handblasgerät (10) zum manuellen pneumatischen Trocknen von Oberflächen durch einen Benutzer des Handblasgeräts (10), mit einer Flachdüsenvorrichtung (22) zum Ausstoßen von komprimierter Luft aus dem Handblasgerät (10) auf die zu trocknende Oberfläche, einem Griffbereich, insbesondere Griff (48) zum manuellen Greifen und Führen der Flachdüsenvorrichtung (22) über die zu trocknende Oberfläche, und einer Fördereinrichtung zum Fördern der komprimierten Luft zu der Flachdüsenvorrichtung (22), wobei die Flachdüsenvorrichtung (22) mit einer Flachdüse (50) gestaltet ist und die Fördereinrichtung mit einem stationär angeordneten, insbesondere ortsfest angeordneten Hochdruckgebläse (30) gestaltet ist, **dadurch gekennzeichnet, dass** mit dem Hochdruckgebläse (30) durch die Flachdüsenvorrichtung (22) ein Volumenstrom von 200 bis 1000 m3/h und eine Strömungsgeschwindigkeit von 50 bis 300 m/s geschaffen ist.

2. Handblasgerät nach Anspruch 1, **dadurch gekennzeichnet, dass** die Fördereinrichtung einen flexiblen Schlauch (21) umfasst, der das Hochdruckgebläse (30) mit der Flachdüsenvorrichtung (22) verbindet.

3. Handblasgerät nach Anspruch 1 oder 2, **dadurch gekennzeichnet, dass** mit dem Hochdruckgebläse (30) durch die Flachdüsenvorrichtung (22) ein Volumenstrom von 300 bis 850 m3/h, vorzugsweise von 350 bis 500 m3/h, vorzugsweise 350 bis 450 m3/h, insbesondere 400 bis 420 m3/h, geschaffen ist.

4. Handblasgerät nach einem der Ansprüche 1 bis 3, **dadurch gekennzeichnet, dass** mit dem Hochdruckgebläse (30) durch die Flachdüsenvorrichtung (22) eine Strömungsgeschwindigkeit von 100 bis 200 m/s, vorzugsweise von 100 bis 150 m/s, insbesondere 120 bis 130 m/s, geschaffen ist.

5. Handblasgerät nach einem der Ansprüche 1 bis 4, **dadurch gekennzeichnet, dass** mit dem Hochdruckgebläse (30) durch die Flachdüsenvorrichtung (22) eine in einem Abstand von 7 cm in Strömungsrichtung vom Düsenaustritt gemessene Strömungsgeschwindigkeit von 40 bis 100 m/s, vorzugsweise von 50 bis 90 m/s, vorzugsweise von 60 bis 80 m/s, insbesondere 70 bis 80 m/s, geschaffen ist.

6. Handblasgerät nach einem der Ansprüche 2 bis 5, **dadurch gekennzeichnet, dass** mit dem Hochdruckgebläse (30) in dem Schlauch (21) eine Strömungsgeschwindigkeit von 20 bis 100 m/s, vorzugsweise von 30 bis 90 m/s, insbesondere von 60 bis 80 m/s geschaffen ist.

7. Handblasgerät nach einem der Ansprüche 1 bis 6, **dadurch gekennzeichnet, dass** die Flachdüse (50) mit einem Flachdüsenschlitz (52) gestaltet ist, der eine Austrittsfläche von 500 bis 1.500 mm², vorzugsweise von 700 bis 1.200 mm², insbesondere von 850 bis 950 mm², aufweist und der vorzugsweise mit einer Austrittsbreite von 100 bis 300 mm, vorzugsweise von 150 bis 250 mm, vorzugsweise von 150 bis 200 mm, insbesondere von 175 bis 185 mm, gestaltet ist und der vorzugsweise mit einer Austrittshöhe von 0,5 bis 20 mm, vorzugsweise von 1 bis 10 mm, vorzugsweise von 2 bis 8 mm, insbesondere von 4 bis 6 mm, insbesondere ca. 5 mm, gestaltet ist.

8. Handblasgerät nach einem der Ansprüche 1 bis 7, **dadurch gekennzeichnet, dass** die Flachdüse (50) mit einem im Wesentlichen rechteckigen Flachdüsenschlitz (52) gestaltet ist, dessen Verhältnis von Austrittsbreite zu Austrittshöhe von 25 bis 60, vorzugsweise von 30 bis 40, insbesondere von 33 bis 38, gestaltet ist.

9. Handblasgerät nach einem der Ansprüche 1 bis 8, **dadurch gekennzeichnet, dass** die Flachdüsenvorrichtung (22) mit einem Rohr (46) zum Heranführen der komprimierten Luft zu der Flachdüse (50) gestaltet ist und die Flachdüse (50) mit einem Flachdüsenschlitz (52) gestaltet ist, der in Bezug auf die Längsachse des Rohres (46) in einem Winkel (56) kleiner 90°, bevorzugt in einem Winkel (56) zwischen 45° und 75°, insbesondere in einem Winkel (56) von 60°, geneigt ausgerichtet ist.

10. Handblasgerät nach Anspruch 9, **dadurch gekennzeichnet, dass** der Flachdüsenschlitz (52) mit einem seiner beiden Enden innerhalb der Projektionsfläche (58) des Rohres (46) endet.

11. Handblasgerät nach einem der Ansprüche 7 bis 10, **dadurch gekennzeichnet, dass** der Flachdüsenschlitz (52) an einem Flachdüsenfächer (64) ausgebildet ist, der in der Form eines gleichseitigen Dreiecks gestaltet ist.

12. Handblasgerät nach einem der Ansprüche 1 bis 11, **dadurch gekennzeichnet, dass** die Flachdüsenvorrichtung (22) mit einem Rohr (46) zum Heranführen der komprimierten Luft zu der Flachdüse (50) gestaltet ist und der Griff (48) in Bezug auf die Längsachse des Rohres (46) in einem Winkel kleiner 90°, bevorzugt in einem Winkel zwischen 45° und 75°, besonders bevorzugt in einem Winkel von 60° geneigt ausgerichtet ist.

13. Handblasgerät nach einem der Ansprüche 1 bis 12, **dadurch gekennzeichnet, dass** an der Flachdüse (50) eine Griffschale (68) zum Halten der Flachdüsenvorrichtung (22) durch den Benutzer ausgebildet ist.

14. Handblasgerät nach einem der Ansprüche 1 bis 13, **dadurch gekennzeichnet, dass** die Flachdüse (50) wenigstens einen Steg (72) aufweist, welche den Flachdüsenschlitz (52) in Längsrichtung in wenigstens zwei Schlitzabschnitte (74,76) teilt.

15. Verwendung eines Handblasgeräts nach einem der Ansprüche 1 bis 14 zum manuellen pneumatischen Trocknen von Oberflächen, insbesondere der Karosserie eines Fahrzeugs.

## Claims

1. A handheld blower device (10) for the manual pneumatic drying of surfaces by a user of the handheld blower device (10), comprising a flat nozzle device (22) for ejecting compressed air from the handheld blower device (10) onto the surface to be dried, a handle region, in particular a handle (48) for manually gripping and guiding the flat nozzle device (22) over the surface to be dried, and a conveying device for conveying the compressed air to the flat nozzle device (22), whereby the flat nozzle device (22) is designed with a flat nozzle (50), and the conveying device is designed with a stationarily arranged, in particular fixedly arranged, high-pressure blower (30), **characterized in that** a volume flow of 200 to 1000 m³/h and a flow rate of 50 to 300 m/s is provided with the high-pressure blower (30) by the flat nozzle device (22) .

2. A handheld blower device according to claim 1, **characterized in that** the conveying device comprises a flexible hose (21) connecting the high-pressure blower (30) to the flat nozzle device (22).

3. A handheld blower device according to claim 1 or 2, **characterized in that** a volume flow of 300 to 850 m³/h, preferably 350 to 500 m³/h, preferably 350 to 450 m³/h, in particular 400 to 420 m³/h, is provided with the high-pressure blower (30) by the flat nozzle device (22).

4. A handheld blower device according to any one of claims 1 to 3, **characterized in that** a flow rate of 100 to 200 m/s, preferably 100 to 150 m/s, in particular 120 to 130 m/s is provided with the high-pressure blower (30) by the flat nozzle device (22).

5. A handheld blower device according to any one of claims 1 to 4, **characterized in that** a flow rate of 40 to 100 m/s, preferably 50 to 90 m/s, preferably 60 to 80 m/s, in particular 70 to 80 m/s, measured at a distance of 7 cm from the nozzle exit in the flow direction, is provided with the high-pressure blower (30) by the flat nozzle device (22).

6. A handheld blower device according to any one of claims 2 to 5, **characterized in that** within the hose (21) a flow rate of 20 to 100 m/s, preferably 30 to 90 m/s, in particular 60 to 80 m/s, is provided with the high-pressure blower (30).

7. A handheld blower device according to any one of claims 1 to 6, **characterized in that** the flat nozzle (50) is formed with a flat nozzle slot (52) having an exit surface of 500 to 1500 mm², preferably 700 to 1200 mm², in particular 850 to 950 mm² and preferably having an exit width of 100 to 300 mm, preferably 150 to 250 mm, preferably 150 to 200 mm, in particular 175 to 185 mm and preferably having an exit height of 0.5 to 20 mm, preferably 1 to 10 mm, preferably 2 to 8 mm, in particular 4 to 6 mm, in particular about 5 mm.

8. A handheld blower device according to any one of claims 1 to 7, **characterized in that** the flat nozzle (50) is formed with a substantially rectangular flat nozzle slot (52) whose ratio of exit width to exit height ranges from 25 to 60, preferably from 30 to 40, in particular from 33 to 38.

9. A handheld blower device according to any one of claims 1 to 8, **characterized in that** the flat nozzle device (22) is formed with a tube (46) for supplying the compressed air to the flat nozzle (50), and the flat nozzle (50) is formed with a flat nozzle slot (52) that is oriented so as to be inclined at an angle (56) smaller than 90°, preferably at an angle (56) of between 45° and 75°, in particular at an angle (56) of 60° relative to the longitudinal axis of the tube (46).

10. A handheld blower device according to any one of claims 9, **characterized in that** the flat nozzle slot (52) terminates within the projection surface (58) of the tube (46) with one of its two ends.

11. A handheld blower device according to any one of claims 7 to 10, **characterized in that** the flat nozzle slot (52) is formed on a flat nozzle fan (64) having the form of an equilateral triangle.

12. A handheld blower device according to any one of claims 1 to 11, **characterized in that** the flat nozzle device (22) is formed with a tube (46) for supplying the compressed air to the flat nozzle (50), and the handle (48) is oriented so as to be inclined at an angle smaller than 90°, preferably at an angle between 45° and 75°, particularly preferably at an angle of 60°, relative to the longitudinal axis of the tube (46).

13. A handheld blower device according to any one of claims 1 to 12, **characterized in that** a grip plate (68) for holding the flat nozzle device (22) by the user is provided on the flat nozzle (50).

14. A handheld blower device according to any one of claims 1 to 13, **characterized in that** the flat nozzle (50) comprises at least one partition (72) dividing the flat nozzle slot (52) into at least two slot portions (74, 76) in the longitudinal direction.

15. The use of a handheld blower device according to any one of claims 1 to 14 for the manual pneumatic drying of surfaces, in particular vehicle bodies.

## Revendications

1. Souffleur à main (10) pour le séchage pneumatique manuel de surfaces par un utilisateur du souffleur à main (10), avec un dispositif à buse plate (22) pour l'expulsion d'air comprimé du souffleur à main (10) sur la surface à sécher, une zone de préhension, en particulier une poignée (48) pour la saisie manuelle et le guidage du dispositif à buse plate (22) sur la surface à sécher, et un dispositif de transport pour le transport de l'air comprimé vers le dispositif à buse plate (22), dans lequel le dispositif à buse plate (22) est conçu avec une buse plate (50) et le dispositif de transport est conçu avec une soufflante haute pression (30) agencée de manière stationnaire, agencée en particulier fixement, **caractérisé en ce qu'**un débit volumique de 200 à 1 000 m³/h et une vitesse d'écoulement de 50 à 300 m/s sont créés avec la soufflante haute pression (30) par le dispositif à buse plate (22).

2. Souffleur à main selon la revendication 1, **caractérisé en ce que** le dispositif de transport comporte un tuyau flexible (21) qui relie la soufflante haute pression (30) au dispositif à buse plate (22).

3. Souffleur à main selon la revendication 1 ou 2, **caractérisé en ce qu'**un débit volumique de 300 à 850 m³/h, de préférence de 350 à 500 m³/h, de préférence de 350 à 450 m³/h, en particulier de 400 à 420 m³/h est créé avec la soufflante haute pression (30) par le dispositif à buse plate (22).

4. Souffleur à main selon l'une des revendications 1 à 3, **caractérisé en ce qu'**une vitesse d'écoulement de 100 à 200 m/s, de préférence de 100 à 150 m/s, en particulier de 120 à 130 m/s est créée avec la soufflante haute pression (30) par le dispositif à buse plate (22).

5. Souffleur à main selon l'une des revendications 1 à 4, **caractérisé en ce qu'**une vitesse d'écoulement mesurée à une distance de 7 cm dans le sens d'écoulement de la sortie de buse de 40 à 100 m/s, de préférence de 50 à 90 m/s, de préférence de 60 à 80 m/s, en particulier de 70 à 80 m/s est créée avec la soufflante haute pression (30) par le dispositif à buse plate (22).

6. Souffleur à main selon l'une des revendications 2 à 5, **caractérisé en ce qu'**une vitesse d'écoulement de 20 à 100 m/s, de préférence de 30 à 90 m/s, en particulier de 60 à 80 m/s est créée avec la soufflante haute pression (30) dans le tuyau (21).

7. Souffleur à main selon l'une des revendications 1 à 6, **caractérisé en ce que** la buse plate (50) est conçue avec une fente de buse plate (52) qui présente une surface de sortie de 500 à 1 500 mm², de préférence de 700 à 1 200 mm², en particulier de 850 à 950 mm², et qui est conçue de préférence avec une largeur de sortie de 100 à 300 mm, de préférence de 150 à 250 mm, de préférence de 150 à 200 mm, en particulier de 175 à 185 mm, et qui est conçue de préférence avec une hauteur de sortie de 0,5 à 20 mm, de préférence de 1 à 10 mm, de préférence de 2 à 8 mm, en particulier de 4 à 6 mm, en particulier environ de 5 mm.

8. Souffleur à main selon l'une des revendications 1 à 7, **caractérisé en ce que** la buse plate (50) est conçue avec une fente de buse plate (52) sensiblement rectangulaire, dont le rapport de la largeur de sortie à la hauteur de sortie est conçu de 25 à 60, de préférence de 30 à 40, en particulier de 33 à 38.

9. Souffleur à main selon l'une des revendications 1 à 8, **caractérisé en ce que** le dispositif à buse plate (22) est conçu avec un tube (46) pour l'approche de l'air comprimé à la buse plate (50) et la buse plate (50) est conçue avec une fente de buse plate (52) qui est orientée de manière inclinée par rapport à l'axe longitudinal du tube (46) selon un angle (56) inférieur à 90°, de préférence selon un angle (56) entre 45° et 75°, en particulier selon un angle (56) de 60°.

10. Souffleur à main selon la revendication 9, **caractérisé en ce que** la fente de buse plate (52) se termine avec une de ses deux extrémités au sein de la surface de projection (58) du tube (46).

11. Souffleur à main selon l'une des revendications 7 à 10, **caractérisé en ce que** la fente de buse plate (52) est réalisée au niveau d'un éventail de buse plate (64) qui est conçu sous la forme d'un triangle équilatéral.

12. Souffleur à main selon l'une des revendications 1 à 11, **caractérisé en ce que** le dispositif à buse plate (22) est conçu avec un tube (46) pour l'approche de l'air comprimé à la buse plate (50) et la poignée (48) est orientée de manière inclinée par rapport à l'axe longitudinal du tube (46) selon un angle inférieur à 90°, de préférence selon un angle entre 45° et 75°, particulièrement de préférence selon un angle de 60°.

13. Souffleur à main selon l'une des revendications 1 à 12, **caractérisé en ce qu'**une coque de préhension (68) est réalisée pour le maintien du dispositif à buse plate (22) par l'utilisateur au niveau de la buse plate (50).

14. Souffleur à main selon l'une des revendications 1 à 13, **caractérisé en ce que** la buse plate (50) présente au moins une nervure (72) qui sépare la fente de buse plate (52) dans le sens longitudinal en au moins deux sections de fente (74, 76).

15. Utilisation d'un souffleur à main selon l'une des revendications 1 à 14 pour le séchage pneumatique manuel de surfaces, en particulier de la carrosserie d'un véhicule.
